(19) Europäisches Patentamt
European Patent Office
Office européen des brevets

(11) **EP 3 165 756 A1**

(12) **EUROPEAN PATENT APPLICATION**

(43) Date of publication:
**10.05.2017 Bulletin 2017/19**

(51) Int Cl.:
***F02K 3/06*** (2006.01)

(21) Application number: **16197386.2**

(22) Date of filing: **04.11.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **06.11.2015 US 201514934228**

(71) Applicant: **United Technologies Corporation Farmington, CT 06032 (US)**

(72) Inventors:
• **SCHWARZ, Frederick M.**
**Glastonbury, CT 06033 (US)**
• **KUPRATIS, Daniel B.**
**Glastonbury, CT 06492 (US)**

(74) Representative: **Hull, James Edward**
**Dehns**
**St. Bride's House**
**10 Salisbury Square**
**London**
**EC4Y 8JD (GB)**

(54) **GEARED TURBOFAN WITH THREE TURBINES WITH HIGH SPEED FAN DRIVE TURBINE**

(57)    A gas turbine engine (20) includes a fan section (22), a first compressor section (30), and a second compressor section (36) compressing air to a higher pressure than the first compressor section (30). A first turbine section (40) driving the second compressor section (36). A second turbine section (34) driving the first compressor section (30). A fan drive turbine section (26), downstream of the second turbine section (34), drives the fan section through a gear reduction (24) and has a first exit area (401) at a first exit point and rotates at a first speed. The second turbine section has a second exit area (400) at a second exit point and rotates at a second, higher speed. Respective performance quantities are defined as the product of the first/second speed squared and the first/second area (401/400).

FIG.1

**Description**

**BACKGROUND**

This application relates to a gas turbine having three turbine sections, with one of the turbine sections driving a fan through a gear change mechanism.

Gas turbine engines are known, and typically include a compressor section compressing air and delivering the compressed air into a combustion section. The air is mixed with fuel and combusted, and the product of that combustion passes downstream over turbine rotors.

In one known gas turbine engine architecture, there are two compressor rotors in the compressor section, and three turbine rotors in the turbine section. A highest pressure turbine rotates a highest pressure compressor. An intermediate pressure turbine rotates a lower pressure compressor, and a third turbine is a fan drive turbine which drives the fan.

**SUMMARY**

A gas turbine engine according to an example of the present disclosure includes a fan section including a fan, a first compressor section, and a second compressor section configured to compress air to a higher pressure than the first compressor section. A first turbine section is configured to drive the second compressor section. A second turbine section is configured to drive the first compressor section. A fan drive turbine section is positioned downstream of the second turbine section. The fan drive turbine section is configured to drive the fan section through a gear reduction. The first compressor section and the second turbine section are configured to rotate as an intermediate speed spool, and the second compressor section and the first turbine section are configured to rotate together as a high speed spool, with the high speed spool, the intermediate speed spool, and the fan drive turbine section each configured to rotate in a first direction. The fan drive turbine section has a first exit area at a first exit point and is configured to rotate at a first speed. The second turbine section has a second exit area at a second exit point and is configured to rotate at a second speed, which is faster than the first speed. A first performance quantity is defined as the product of the first speed squared and the first area. A second performance quantity is defined as the product of the second speed squared and the second area. A ratio of the first performance quantity to the second performance quantity is less than or equal to about 1.5.

In a further embodiment of any of the forgoing embodiments, the gear reduction is configured to cause the fan section to rotate in the first direction.

In a further embodiment of any of the forgoing embodiments, the ratio is above or equal to about 0.8.

In a further embodiment of any of the forgoing embodiments, the fan drive turbine section has at least three stages.

In a further embodiment of any of the forgoing embodiments, a pressure ratio across the fan drive turbine section is greater than about 5:1.

In a further embodiment of any of the forgoing embodiments, a bypass ratio is defined for the fan section, as a ratio of the amount of air delivered into a bypass path divided by the amount of air delivered to the first compressor section, and the bypass ratio is greater than about 10.

In a further embodiment of any of the forgoing embodiments, a gear reduction ratio of the gear reduction is greater than or equal to about 2.5.

In a further embodiment of any of the forgoing embodiments, the first turbine section has one or two stages.

In a further embodiment of any of the forgoing embodiments, the fan drive turbine section has between two and six stages.

In a further embodiment of any of the forgoing embodiments, a low fan pressure ratio is defined as the ratio of total pressure across the fan alone, before any fan exit guide vanes, and the low fan pressure ratio is less than about 1.50.

A gas turbine engine according to an example of the present disclosure includes a fan section including a fan, a first compressor section and a second compressor section. The second compressor section is configured to compress air to a higher pressure than the first compressor section. A first turbine section is configured to drive the second compressor section. A second turbine section is configured to drive the first compressor section. A fan drive turbine section is positioned downstream of the second turbine section. The fan drive turbine section is configured to drive the fan section through a gear reduction. A pressure ratio across the fan drive turbine section is greater than about 5:1. The first compressor section and the second turbine section rotate as an intermediate speed spool. The second compressor section and the first turbine section rotate together as a high speed spool, with the high speed spool, the intermediate speed spool, and the fan drive turbine section configured to rotate in a first direction. The gear reduction is configured to cause the fan section to rotate in the first direction. The fan drive turbine section has a first exit area at a first exit point and is configured to rotate at a first speed. The second turbine section has a second exit area at a second exit point and is configured to rotate at a second speed, which is faster than the first speed. A first performance quantity is defined as the product of the first speed squared and the first area. A second performance quantity is defined as the product of the second speed squared and the second area. A ratio of the first performance quantity to the second performance quantity is less than or equal to about 1.5.

In a further embodiment of any of the forgoing embodiments, the ratio is above or equal to about 0.8.

In a further embodiment of any of the forgoing embodiments, the fan drive turbine section has between two and six stages.

In a further embodiment of any of the forgoing embodiments, the ratio is above or equal to about 0.5. The fan drive turbine section has at least three stages.

In a further embodiment of any of the forgoing embodiments, a bypass ratio is defined for the fan section, as a ratio of the amount of air delivered into a bypass path divided by the amount of air delivered to the first compressor section, and the bypass ratio is greater than about 10.

In a further embodiment of any of the forgoing embodiments, a gear reduction ratio of the gear reduction is greater than about 2.5.

In a further embodiment of any of the forgoing embodiments, the first turbine section has one or two stages.

A method of designing a gas turbine engine according to an example of the present disclosure includes providing a fan section, providing a compressor section in fluid communication with the fan section, including a first compressor section upstream of a second compressor section, and providing a first turbine section, a second turbine section, and a fan drive turbine section positioned downstream of the second turbine section. The first turbine section is configured to drive the second compressor section. The second turbine section is configured to drive the first compressor section, and the fan drive turbine section is configured to drive the fan section through a gear reduction. The first compressor section and the second turbine section are configured to rotate as an intermediate speed spool, and the second compressor section and the first turbine section are configured to rotate together as a high speed spool. The fan drive turbine section has a first exit area at a first exit point and is configured to rotate at a first speed. The second turbine section has a second exit area at a second exit point and is configured to rotate at a second speed, which is faster than the first speed. A first performance quantity is defined as the product of the first speed squared and the first area at a predetermined design target. A second performance quantity is defined as the product of the second speed squared and the second area at a predetermined design target, and a ratio of the first performance quantity to the second performance quantity is between about 0.8 and about 1.5.

In a further embodiment of any of the forgoing embodiments, the predetermined design target corresponds to a takeoff condition.

In a further embodiment of any of the forgoing embodiments, an overall pressure ratio is provided by the combination of a pressure ratio across the first compressor section and a pressure ratio across the second compressor section at the predetermined design target, and the overall pressure ratio is greater than or equal to about 35.

These and other features of the invention would be better understood from the following specifications and drawings, the following of which is a brief description.

## BRIEF DESCRIPTION OF THE DRAWINGS

Figure 1 schematically shows a gas turbine engine.
Figure 2 shows exit areas in a schematic engine.

## DETAILED DESCRIPTION

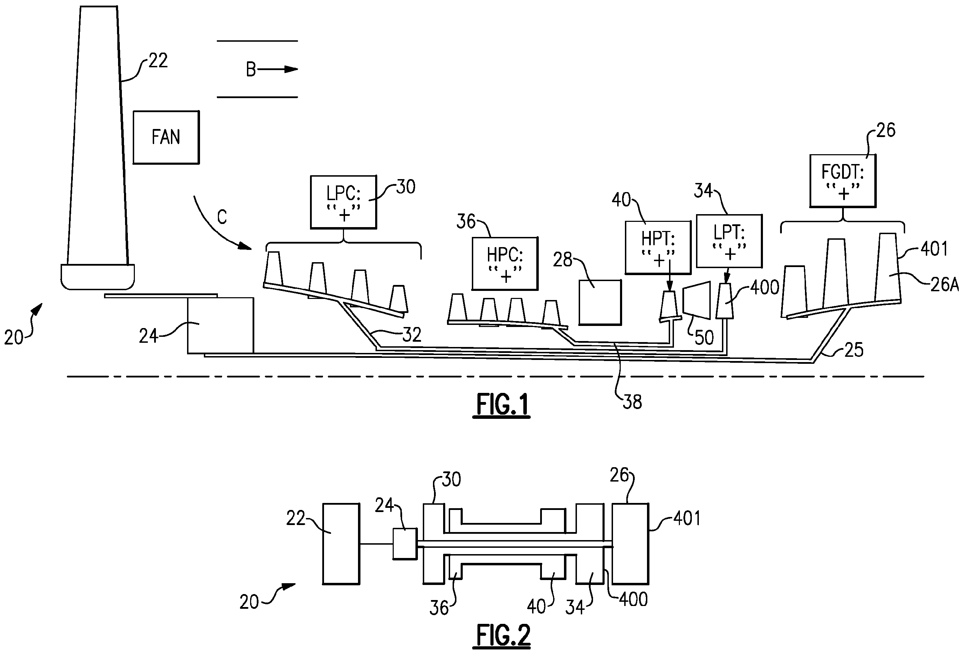

A gas turbine engine 20 is illustrated in Figure 1, and incorporates a fan 22 driven through a gear reduction 24. The gear reduction 24 is driven with a low speed spool 25 by a fan/gear drive turbine ("FGDT") 26. Air is delivered from the fan as bypass air B, and into a low pressure compressor 30 as core air C. The air compressed by the low pressure compressor 30 passes downstream into a high pressure compressor 36, and then into a combustion section 28. From the combustion section 28, gases pass across a high pressure turbine 40, low pressure turbine 34, and fan drive turbine 26. In the illustrated example, low pressure compressor 30 has the same number of stages as the high pressure compressor 36. In other examples, the low pressure compressor 30 includes fewer stages than the high pressure compressor 36.

A plurality of vanes and stators 50 may be mounted between the several turbine sections. In particular, as shown, the low pressure compressor 30 rotates with an intermediate pressure spool 32 and the low pressure turbine 34 in a first ("+") direction. The fan drive turbine 26 rotates with a shaft 25 in the same ("+") direction as the low pressure spool 32. The speed change gear 24 may cause the fan 22 to rotate in the first ("+") direction. However, the fan rotating in the opposed direction (the second direction) would come within the scope of this invention. As is known within the art, a star gear arrangement may be utilized for the fan to rotate in an opposite direction as to the fan/gear drive turbine 26. On the other hand, a planetary gear arrangement may be utilized, wherein the two rotate in the same direction. The high pressure compressor 36 rotates with a spool 38 and is driven by a high pressure turbine 40 in the first direction ("+").

Since the turbines 26, 34 and 40 are rotating in the same direction, a first type of vane 50 is incorporated between these three sections. Vane 50 may be a highly cambered vane, and may be used in combination with a mid-turbine frame. The vane 50 may be incorporated into a mid-turbine frame as an air turning mid-turbine frame ("TMTF") vane.

The fan drive turbine 26 in this arrangement can operate at a higher speed than other fan drive turbine arrangements. The fan drive turbine can have shrouded blades, which provides design freedom.

The low pressure compressor may have more than three stages. The fan drive turbine has at least two, and up to six stages. The high pressure turbine as illustrated may have one or two stages, and the low pressure turbine may have one or two stages.

An exit area 400 is shown, in Figures 1 and 2, at the exit location for the low pressure turbine section 34 is the annular area of the last blade of turbine section 34. An exit area for the fan drive turbine section 26 is defined at exit 401, and is the annular area defined by the last blade of that turbine section 26. With this arrangement, and with the other structure as set forth above, including the various quantities and operational ranges, a very high speed can be provided to the low pressure spool. Turbine section operation is often evaluated looking at a performance quantity, which is the exit area for the turbine section multiplied by its respective speed squared. This performance quantity ("PQ") is defined as:

$$Equation\ 1: \quad PQ_{fdt} = (A_{fdt}\ x\ V_{fdt}{}^2)$$

$$Equation\ 2: \quad PQ_{lpt} = (A_{lpt}\ x\ V_{lpt}{}^2)$$

where $A_{fdt}$ is the area of the fan drive turbine section at the exit thereof (e.g., at 401), where $V_{fdt}$ is the speed of the fan drive turbine section, where $A_{lpt}$ is the area of the low pressure turbine section at the exit thereof (e.g., at 400), and where $V_{lpt}$ is the speed of the low pressure turbine section.

Thus, a ratio of the performance quantity for the fan drive turbine section compared to the performance quantify for the low pressure turbine section is:

$$Equation\ 3: \quad (A_{fdt}\ x\ V_{fdt}{}^2)/(A_{lpt}\ x\ V_{lpt}{}^2) = PQ_{fdt/}\ PQ_{lpt}$$

In one turbine embodiment made according to the above design, the areas of the fan drive and low pressure turbine sections are 557.9 $in^2$ (3599 $cm^2$) and 90.67 $in^2$ (585 $cm^2$), respectively. Further, the speeds of the fan drive and low pressure turbine sections are 10179 rpm and 24346 rpm, respectively. Thus, using Equations 1 and 2 above, the performance quantities for the fan drive and low pressure turbine sections are:

$$Equation\ 1: \quad PQ_{fdt} = (A_{fdt}\ x\ V_{fdt}{}^2) = (557.9\ in^2)(10179\ rpm)^2 =$$
$$57805157673.9\ in^2\ rpm^2\ (372.9\ x\ 10^9\ cm^2\ rpm^2)$$

$$Equation\ 2: \quad PQ_{hpt} = (A_{lpt}\ x\ V_{lpt}{}^2) = (90.67\ in^2)(24346\ rpm)^2 =$$
$$53742622009.72\ in^2\ rpm^2\ (346.7\ x\ 10^9\ cm^2\ rpm^2)$$

and using Equation 3 above, the ratio for the low pressure turbine section to the high pressure turbine section is:

$$Ratio = PQ_{fdt/}\,PQ_{lpt} = 57805157673.9\ in^2\ rpm^2\ /\ 53742622009.72\ in^2\ rpm^2 =$$

$$1.075$$

In another embodiment, the ratio was about 0.5 and in another embodiment the ratio was about 1.5. With $PQ_{fdt/}$ $PQ_{lpt}$ ratios in the 0.5 to 1.5 range, a very efficient overall gas turbine engine is achieved. More narrowly, $PQ_{fdt/}\,PQ_{lpt}$ ratios of above or equal to about 0.8 are more efficient. Even more narrowly, $PQ_{fdt/}\,PQ_{lpt}$ ratios above or equal to 1.0 are even more efficient. As a result of these $PQ_{fdt/}\,PQ_{lpt}$ ratios, in particular, the turbine section can be made much smaller than in the prior art, both in diameter and axial length. In addition, the efficiency of the overall engine is greatly increased.

In some examples, engine 20 is designed at a predetermined design target defined by performance quantities for the low pressure turbine 34 and fan/gear drive turbine section 26. In further examples, the predetermined design target is defined by pressure ratios of the low pressure and high pressure compressors 30, 36.

In some examples, the overall pressure ratio corresponding to the predetermined design target is greater than or equal to about 35:1. That is, after accounting for a pressure rise of the fan section 22 in front of the low pressure compressor 30, the pressure of the air entering the low pressure compressor 30 should be compressed as much or over 35 times by the time it reaches an outlet of the high pressure compressor 36. In other examples, an overall pressure ratio corresponding to the predetermined design target is greater than or equal to about 40:1, or greater than or equal to about 50:1. In some examples, the overall pressure ratio is less than about 70:1, or more narrowly less than about 50:1. In some examples, the predetermined design target is defined at sea level and at a static, full-rated takeoff power condition. In other examples, the predetermined design target is defined at a cruise condition.

The engine 20 is a high-bypass geared aircraft engine. The bypass ratio is the amount of air delivered into bypass path B divided by the amount of air into core path C. In a further example, the engine 20 bypass ratio is greater than about six and less than about thirty, or more narrowly less than about twenty, with an example embodiment being greater than ten, the geared architecture 24 is an epicyclic gear train, such as a planetary gear system or other gear system, with a gear reduction ratio of greater than about 2.3 and the fan/gear drive turbine section 26 has a pressure ratio that is greater than about 5. In some embodiments, the gear reduction ratio is less than about 5.0, or less than about 4.0. In one disclosed embodiment, the engine 20 bypass ratio is greater than about ten, the fan diameter is significantly larger than that of the low pressure compressor section 30, and the fan/gear drive turbine section 26 has a pressure ratio that is greater than about five. In some embodiments, fan/gear drive turbine section 26 has a pressure ratio that is less than about 20:1, or less than about 10:1. In some embodiments, the high pressure turbine section 40 may have two or fewer stages. In contrast, the fan/gear drive turbine section 26, in some embodiments, has between two and six stages. Further the fan/gear drive turbine section 26 pressure ratio is total pressure measured prior to inlet of fan/gear drive turbine section 26 as related to the total pressure at the outlet of the fan/gear drive turbine section 26 prior to an exhaust nozzle. The geared architecture 24 may be an epicycle gear train, such as a planetary gear system or other gear system, with a gear reduction ratio of greater than or equal to about 2.5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 m). The flight condition of 0.8 Mach and 35,000 ft (10,668 m), with the engine at its best fuel consumption - also known as "bucket cruise Thrust Specific Fuel Consumption ("TSFC"). TSFC is the industry standard parameter of the rate of lbm of fuel being burned per hour divided by lbf of thrust the engine produces at that flight condition. "Low fan pressure ratio" is the ratio of total pressure across the fan blade alone, before the fan exit guide vanes. The low fan pressure ratio as disclosed herein according to one non-limiting embodiment is less than about 1.50, or more narrowly less than about 1.45. "Low corrected fan tip speed" is the actual fan tip speed in ft/sec divided by an industry standard temperature correction of $[(\text{Ram Air Temperature deg R} / 518.7)^{0.5}$ (where deg $R = K \times {}^9/_5)]$. The "Low corrected fan tip speed" as disclosed herein according to one non-limiting embodiment is less than about 1150 ft / second (350.5 m/s). Further, the fan 22 may have 26 or fewer blades.

Engines made with the disclosed architecture, and including turbine sections as set forth in this application, and with modifications coming from the scope of the claims in this application, thus provide very high efficient operation, and increased fuel efficiency and lightweight relative to their thrust capability.

Although an embodiment of this invention has been disclosed, a worker of ordinary skill in this art would recognize that certain modifications would come within the scope of this invention. For that reason, the following claims should be studied to determine the true scope and content of this invention.

**Claims**

1. A gas turbine engine (20) comprising:

    a fan section including a fan (22), a first compressor section (30), and a second compressor section (36) configured to compress air to a higher pressure than said first compressor section (30);
    a first turbine section (40) configured to drive said second compressor section (36);
    a second turbine section (34) configured to drive said first compressor section (30); and
    a fan drive turbine section (26) positioned downstream of said second turbine section (34), said fan drive turbine section (26) configured to drive said fan section through a gear reduction (24), wherein said first compressor section (30) and said second turbine section (34) are configured to rotate as an intermediate speed spool (32), and said second compressor section (36) and said first turbine section (40) are configured to rotate together as a high speed spool (38), with said high speed spool (38), said intermediate speed spool (32), and said fan drive turbine section (26) each configured to rotate in a first direction, said fan drive turbine section (26) has a first exit area (401) at a first exit point and is configured to rotate at a first speed, said second turbine section (34) has a second exit area (400) at a second exit point and is configured to rotate at a second speed which is faster than the first speed, a first performance quantity is defined as the product of the first speed squared and the first area (401), a second performance quantity is defined as the product of the second speed squared and the second area (400), and a ratio of the first performance quantity to the second performance quantity is less than or equal to 1.5.

2. The engine (20) as set forth in claim 1, wherein said gear reduction (24) is configured to cause said fan section to rotate in said first direction.

3. The engine (20) as set forth in claim 1 or 2, wherein said ratio is above or equal to 0.5.

4. The engine (20) as set forth in any preceding claim, wherein said ratio is above or equal to 0.8.

5. The engine (20) as set forth in any preceding claim, wherein said fan drive turbine section (26) has at least three stages.

6. The engine (20) as set forth in any preceding claim, wherein a pressure ratio across said fan drive turbine section (26) is greater than 5:1.

7. The engine (20) as set forth in any preceding claim, wherein a bypass ratio is defined for said fan section, as a ratio of the amount of air delivered into a bypass path divided by the amount of air delivered to said first compressor section (30), and said bypass ratio being greater than 10.

8. The engine (20) as set forth in any preceding claim, wherein a gear reduction ratio of the gear reduction (24) is greater than or equal to 2.5.

9. The engine (20) as set forth in any preceding claim, wherein said first turbine section (40) has one or two stages.

10. The engine (20) as set forth in any preceding claim, wherein said fan drive turbine section (26) has between two and six stages.

11. The engine (20) as set forth in claim 10, wherein a low fan pressure ratio is defined as the ratio of total pressure across the fan (22) alone, before any fan exit guide vanes, and said low fan pressure ratio is less than 1.50.

12. A method of designing a gas turbine engine (28), comprising:

    providing a fan section;
    providing a compressor section in fluid communication with said fan section, including a first compressor section (30) upstream of a second compressor section (36); and
    providing a first turbine section (40), a second turbine section (34), and a fan drive turbine section (26) positioned downstream of said second turbine section (34), said first turbine section (40) configured to drive said second compressor section (36), said second turbine section (34) configured to drive said first compressor section (30), and said fan drive turbine section (26) configured to drive said fan section through a gear reduction (24), wherein said first compressor section (30) and said second turbine section (34) are configured to rotate as an intermediate speed spool (32), and said second compressor section (36) and said first turbine section (40) are configured to rotate together as a high speed spool (38), said fan drive turbine section (26) has a first exit area (401) at a first exit point and is configured to rotate at a first speed, said second turbine section (34) has a second exit area (400) at a second exit point and is configured to rotate at a second speed which is faster than the first speed, and a first performance quantity is defined as the product of the first speed squared and the first area (401) at a predetermined design target, a second performance quantity is defined as the product of the second speed squared and the second area (400) at a predetermined design target, and a ratio of the first performance quantity to the second performance quantity is between 0.8 and 1.5.

13. The method as set forth in claim 12, wherein the predetermined design target corresponds to a takeoff condition.

14. The method as set forth in claim 12 or 13, wherein an overall pressure ratio is provided by the combination of a pressure ratio across said first compressor section (30) and a pressure ratio across said second compressor section (36) at the predetermined design target, and the overall pressure ratio is greater than or equal to 35.

EP 3 165 756 A1

FAN

B →

C

FGDT: "+" — 26

LPC: "+" — 30

36 — HPC: "+"

40 — HPT: "+"

34 — LPT: "+"

401

26A

22

20

24

32

28

400

50

38

25

<u>FIG.1</u>

30

26

22

24

401

20

36

40

34

400

<u>FIG.2</u>

Europäisches
Patentamt

European
Patent Office

Office européen
des brevets

## EUROPEAN SEARCH REPORT

Application Number

EP 16 19 7386

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/318998 A1 (SCHWARZ FREDERICK M [US] ET AL) 5 December 2013 (2013-12-05) * figure 1 * * claims 1, 3, 5, 7, 11 * * paragraph [0038] * | 1-14 | INV. F02K3/06 |
| A | US 2003/163983 A1 (SEDA JORGE F [US] ET AL) 4 September 2003 (2003-09-04) * paragraph [0040] * | 1-14 | |
| A | Jayant Sabnis ET AL: "THE PW1000G PURE POWER NEW ENGINE THE PW1000G PURE POWER NEW ENGINE CONCEPT AND ITS IMPACT ON MRO Jayant Sabnis Vice President, System Functional Design Av Week Engine MRO Forum", , 1 December 2010 (2010-12-01), pages 1-45, XP055155486, Av Week engine MRO Forum, Munich, Germany Retrieved from the Internet: URL:http://events.aviationweek.com/html/mr oeng10/Day2 - The PW1000G Pure Power New Engine Concept.SABNIS (P&W).pdf [retrieved on 2014-11-27] * page 19 * | 1-14 | |
| | | | TECHNICAL FIELDS SEARCHED (IPC) |
| | | | F02K |
| A | US 2014/020404 A1 (SHERIDAN WILLIAM G [US] ET AL) 23 January 2014 (2014-01-23) * paragraph [0046] * * paragraph [0081] * | 1-14 | |

-/--

The present search report has been drawn up for all claims

| Place of search | Date of completion of the search | Examiner |
|---|---|---|
| The Hague | 20 March 2017 | Werner, Christopher |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 16 19 7386

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Bruce E Wendus ET AL: "Follow-On Technology Requirement Study for Advanced Subsonic Transport", NASA, 1 August 2003 (2003-08-01), XP055279476, Retrieved from the Internet: URL:https://ntrs.nasa.gov/search.jsp?R=200 30067946 [retrieved on 2016-06-10] * page 8, paragraph 3.2.3.2 * * figure 6 * ----- | 1-14 | |

TECHNICAL FIELDS
SEARCHED (IPC)

The present search report has been drawn up for all claims

| Place of search | Date of completion of the search | Examiner |
|---|---|---|
| The Hague | 20 March 2017 | Werner, Christopher |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 16 19 7386

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2017

| Patent document cited in search report | | Publication date | Patent family member(s) | | Publication date |
|---|---|---|---|---|---|
| US 2013318998 | A1 | 05-12-2013 | EP | 2855875 A2 | 08-04-2015 |
| | | | US | 2013318998 A1 | 05-12-2013 |
| | | | WO | 2014025441 A2 | 13-02-2014 |
| US 2003163983 | A1 | 04-09-2003 | CA | 2419367 A1 | 01-09-2003 |
| | | | CN | 1453466 A | 05-11-2003 |
| | | | EP | 1340903 A2 | 03-09-2003 |
| | | | JP | 2003286857 A | 10-10-2003 |
| | | | RU | 2302545 C2 | 10-07-2007 |
| | | | US | 2003163983 A1 | 04-09-2003 |
| US 2014020404 | A1 | 23-01-2014 | NONE | | |

EPO FORM P0459

For more details about this annex : see Official Journal of the European Patent Office, No. 12/82